# EUROPÄISCHE PATENTANMELDUNG

(11) **EP 4 559 665 A1**
(43) Veröffentlichungstag der Anmeldung: **28.05.2025**
(21) Anmeldenummer: 24214421.0
(22) Anmeldetag: 21.11.2024
(51) Int. Cl.: B29C 64/118, B29C 64/30, B29C 64/379, B33Y 10/00, B33Y 30/00, B33Y 40/00, B33Y 50/02, B33Y 70/10, B22F 10/39, G01N 21/00

(54) **IDENTIFIZIEREN EINES MATERIALS EINER ADDITIV GEFERTIGTEN KOMPONENTE**

(30) Priorität: 23.11.2023 DE 102023132636
(71) Anmelder: KRONES AG, 93073 Neutraubling (DE)
(72) Erfinder: KARL, Johannes, 93073 Neutraubling (DE); ALLGEIER, Stephanie, 93073 Neutraubling (DE); POEPPEL, David, 93073 Neutraubling (DE)
(74) Vertreter: v. Bezold & Partner Patentanwälte - PartG mbB

(57) **Zusammenfassung**

Die Offenbarung betrifft u.a. ein Verfahren zum Identifizieren eines Materials einer Komponente (10). Das Verfahren weist ein Bereitstellen der Komponente (10), die mittels einer additiven Fertigungsvorrichtung (12) hergestellt ist, auf. Das Verfahren weist ein Bestrahlen der Komponente (10) mit einer elektromagnetischen Strahlung mittels einer Strahlungsquelle (14) auf. Das Verfahren weist ein Aufnehmen eines Spektrums der bestrahlten Komponente (10) mittels einer Aufnahmeeinrichtung (18) auf. Das Verfahren weist ein Auswerten des aufgenommenen Spektrums auf eine Übereinstimmung mit mindestens einem vorgegebenen Spektrum, das einem vorbestimmten Material mit mindestens einem Nanopartikelmarker zum Identifizieren des vorbestimmten Materials zugeordnet ist, mittels einer Auswerteeinrichtung (20) auf. Das Verfahren weist ein Ausgeben eines Ergebnisses des Auswertens mittels einer Ausgabeeinrichtung (22) auf.

## Beschreibung

### Technisches Gebiet

Die Erfindung betrifft ein Verfahren und ein mobiles Endgerät zum Identifizieren eines Materials einer additiv gefertigten Komponente. Die Erfindung betrifft ferner eine additiv gefertigte Komponente und ein Verfahren zu dessen Herstellung.

### Technischer Hintergrund

Der Einsatz von additiver Fertigung für die Vor-Ort-Versorgung von Kunden mit Ersatzteilen oder Verschleißteilen birgt das Potential, Anlagenstillstandzeiten und Lagerkosten erheblich zu verringern. Bspw. kann der Kunde direkt vor Ort ein entsprechendes Ersatzteil oder Verschleißteil für die Anlage additiv fertigen lassen, wenn das Teil benötigt wird.

Die Vor-Ort-Versorgung von Kunden mit Ersatzteilen oder Verschleißteilen durch den Einsatz von additiver Fertigung birgt jedoch auch gewisse Risiken. Beispielsweise kann ein Kunde beim Einlegen einer Materialfilamentspule in die additive Fertigungsvorrichtung die Materialfilamentspulen verwechseln und eine falsche Materialfilamentspule mit bspw. einem falschen Material verwenden. Dies kann dazu führen, dass die additive Fertigungsvorrichtung selbst nicht funktioniert, da die verschiedenen Filamente verschiedene Temperaturen, etc. benötigen können, um überhaupt druckbar zu sein. Zum anderen kann es vorkommen, dass der Kunde nach dem additiven Fertigen ein augenscheinlich passendes Bauteil bzw. Ersatzteil in die Maschine einbaut, das Bauteil allerdings nicht den entsprechenden Einflüssen in der Maschine standhält, da es aus dem falschen Material besteht.

Um zu verhindern, dass eine additive Fertigungsvorrichtung eine Komponente aus einem falschen Material herstellt, offenbart beispielsweise die DE 10 2022 107 007 A1 ein Verfahren zum Betreiben einer additiven Fertigungsvorrichtung.

Aus der DE 10 2010 007 566 A1 ist ein Fälschungsschutz mit einem Sicherheitselement zur eindeutigen Markierung von Produkten aller Art bekannt. Das Sicherheitselement weist ein verdecktes oder offenes Sicherheitsmerkmal zur Unterscheidung von Raubkopien oder Nachahmungen eines Produktes vom Original auf. Das Sicherheitsmerkmal besteht aus mindestens einem anorganischen Lumineszenzpigment.

Zum weiteren Stand der Technik wird noch auf die DE 10 2016 125 471 A1, die DE 10 2017 118 601 A1 und die WO 2021/176097 A1 hingewiesen.

Der Erfindung liegt die Aufgabe zu Grunde, eine verbesserte Technik zum Prüfen und Sicherstellen einer gewünschten Bauteilqualität einer additiv gefertigten Komponente, vorzugsweise für eine Behälterbehandlungsanlage, zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein Verfahren zum Identifizieren eines Materials einer Komponente, vorzugsweise einer Behälterbehandlungsanlage. Das Verfahren weist ein Bereitstellen der Komponente, die (z. B. vollständig) mittels einer additiven Fertigungsvorrichtung hergestellt ist, auf. Das Verfahren weist ferner ein Bestrahlen der Komponente mit einer elektromagnetischen Strahlung mittels einer Strahlungsquelle auf. Das Verfahren weist ferner ein Aufnehmen eines Spektrums, vorzugsweise Emissions- und/oder Absorptionsspektrums, der bestrahlten Komponente mittels einer Aufnahmeeinrichtung (z. B. aufweisend eine Kamera, ein Spektrometer und/oder eine Hyperspektralkamera) auf. Das Verfahren weist ferner ein Auswerten des aufgenommenen Spektrums auf eine (z. B. vollständige, teilweise oder überwiegende) Übereinstimmung mit mindestens einem vorgegebenen Spektrum (Spektrumseigenschaft), das einem vorbestimmten Material mit mindestens einem Nanopartikelmarker (Marker aus Nanopartikeln) zum (z. B. eindeutigen) Identifizieren des vorbestimmten Materials zugeordnet ist, mittels einer Auswerteeinrichtung auf. Das Verfahren weist ferner ein Ausgeben eines Ergebnisses des Auswertens mittels einer (z. B. visuellen, akustischen und/oder haptischen) Ausgabeeinrichtung auf.

Vorteilhaft kann das Verfahren ermöglichen, dass erkannt werden kann, ob die additiv gefertigte Komponente tatsächlich aus dem gewünschten Material additiv gefertigt wurde. Hierzu werden Nanopartikel als Marker verwendet, über die das Material eindeutig und auf zuverlässige Weise durch Spektrumsuntersuchung identifiziert werden kann. Vorteilhaft kann so sichergestellt werden, dass das richtige Material für das additiv gefertigte Bauteil genutzt wurde, was sich vorteilhaft auf die Bauteil-, die Produkt- und/oder die Produktionssicherheit (z. B. Lagerhaltung, richtiges Bauteil in der Maschine, etc.) auswirken kann. Vorteilhaft verändern die als Marker genutzten Nanopartikel dabei die Eigenschaften des (Grundstoffs des) vorbestimmten Materials nicht. Das Verfahren ermöglicht bspw. Auch eine Chargenverfolgung sowie eine eindeutige Identifizierbarkeit von zur Einzelidentifikation mit mindestens einem Nanopartikelmarker markierten Materialien.

Vorzugsweise kann als elektromagnetische Strahlung bspw. UV-Strahlung, VIS-Strahlung oder Infrarotstrahlung genutzt werden.

Bevorzugt kann als Strahlungsquelle jedwede Strahlungsquelle zur Aussendung von elektromagnetischer Strahlung im ultravioletten, sichtbaren oder im Infrarotbereich genutzt werden. Die Strahlungsquelle kann bspw. Eine LED, ein Laser, eine Gasentladungslampe, eine Halogen- oder eine Glühlampe sein.

Vorzugsweise kann beim Auswerten auf Übereinstimmung mit dem Spektrum des mindestens einen vorbestimmten Materials insbesondere geprüft werden, ob der mindestens eine Nanopartikelmarker in dem aufgenommenen Spektrum, vorzugsweise Emissions- und/oder Absorptionsspektrum, identifiziert werden kann oder nicht. Dies kann in dem aufgenommenen Spektrum anhand von selektiven Absorptions- und/oder Emissionspeaks, Banden, Signalabschwächungen oder Signallöschungen, Intensitätsmaxima oder Intensitätsminima, oder anderer charakteristischer Signalformen des mindestens einen Nanopartikelmarkers erkennbar sein.

Vorzugsweise kann der Nanopartikelmarker (Marker aus Nanopartikeln) eine Nanopartikelgröße zwischen 1 nm und 100 nm aufweisen.

Bevorzugt kann der Nanopartikelmarker aus beliebigen optisch und spektroskopisch identifizierbaren Substanzen ausgewählt sein. Diese Substanzen können innerhalb eines Grundstoffs des vorbestimmten Materials chemisch und physikalisch stabil sein und die Materialeigenschaften nicht oder kaum nachteilig beeinflussen. Gut geeignete Substanzen, die als Nanopartikelmarker eingesetzt werden können, sind organische Farbstoffe und/oder Komplexverbindungen, organische Lumineszenzmittel und/oder anorganische Lumineszenzmittel. Diese Lumineszenzmittel werden bereits vielfach bei der Identifizierung von Gegenständen, beispielsweise bei Geldnoten und anderen Wertdokumenten eingesetzt. Organische Farbstoffe und/oder Komplexverbindungen und/oder Lumineszenzmittel können ausgewählt sein aus organisch konjungierten Systemen wie Fluoresceinderivate, Coumarinderivate, Oxazinderivate, Rhodaminderivate, Lumogene, Pyrromethen-Farbstoffderivate oder andere. Für die Verwendung von Komplexverbindungen kommen Komplexe der Seltenen Erden mit Eu3+, Tb3+, Sm2+, Sm3+, Nd3+, Ce3+, Pr3+, Pr4+, Dy3+,Ho3+, Er3+, Tm3+ Yb2+ oder Yb3+ aber auch Komplexverbindungen mit Ru3+, Cr3+, Mn2+, Mn3+, Mn4+, Fe3+. Fe4+, Fe5+, Co3+, Co4+ Ni2+, oder Cu+ komplexiert mit organisch konjungierten Liganden wie Acetylaceton (ACAC), Dibenzoylmethan (DBM), 4,4,4-Trifluoro-1-(2-naphtyl)-1,3-butandion (TFNB), Thenoyltrifluoroaceton (TTFA), Bipyridinderivate, Phenanthrolinderivate oder andere organische komplexierende Liganden in Betracht. Anorganische Lumineszenzmittel können ausgewählte Festkörperverbindungen sein, die ein oder mehrere lumineszierende Ionen aus der Gruppe In+, Sn2+, Pb2+, Sb3+, Bi3+, Ce3+, Ce4+, Pr3+, Nd3+, Sm2+, Sm3+, Eu2+, Eu3+, Gd3+, Tb3+, Dy3+, Ho3+, Er3+, Tm2+, Tm3+, Yb2+, Yb3+, Ti3+, V2+, V3+, V4+, Cr3+, Mn2+, Mn3+, Mn4+, Fe3+, Fe4+, Fe5+, Co3+, Co4+, Ni2+, Cu+, Ru2+, Ru3+, Pd2+, Ag+, Ir3+, Pt2+ und Au+ enthalten. Bevorzugt sind anorganische Lumineszenzpigmente binäre, ternäre oder quaternäre Halogenide, Oxide, Oxyhalogenide, Sulfide, Oxysulfide, Sulfate, Oxysulfate, Selenide, Nitride, Oxynitride, Nitrate, Oxynitrate, Phosphide, Phosphate, Carbonate, Silikate, Oxysilikate, Vanadate, Molybdate, Wolframate, Germanate oder Oxygermanate der Elemente Li, Na, K, Rb, Mg, Ca, Sr, Sc, Y, La, Ti, Zr, Hf, Nb, Ta, Zn, Gd, Lu, Al, Ga und In.

Besonders bevorzugt ist das vorbestimmte Material ein Kunststoffmaterial, vorzugsweise PA CF, PA, TPU, PLA oder Tough PLA, mit dem mindestens einen Nanopartikelmarker.

In einem Ausführungsbeispiel sind die Strahlungsquelle, die Aufnahmeeinrichtung und die Ausgabeeinrichtung, sowie optional die Auswerteeinrichtung, in einem mobilen (tragbaren) Endgerät, vorzugsweise Handheld-Endgerät, integriert. Vorteilhaft kann das Verfahren damit besonders ergonomisch und bspw. direkt an der Maschine, in der die Komponente eingebaut oder einzubauen ist, oder an jedem anderen gewünschten Ort durchgeführt werden.

In einem weiteren Ausführungsbeispiel weist das Verfahren ferner ein Abrufen einer Zusatzinformation, die dem vorbestimmten Material zugeordnet ist, wenn beim Auswerten eine Übereinstimmung mit dem diesen vorbestimmten Material zugeordneten, vorgegebenen Spektrum festgestellt wird, von einem Datenspeicher (z. B. der Auswerteeinrichtung, des mobilen Endgeräts oder einer Servereinrichtung) auf. Das Verfahren kann ferner ein Ausgeben der abgerufenen Zusatzinformationen mittels der Ausgabeeinrichtung aufweisen. Vorzugsweise kann die Zusatzinformation mindestens eines aufweisen von eine Materialnummer, eine Materialbezeichnung, eine Chargennummer, ein Materialherstellzeitpunkt, ein digitaler Verweis (Link) auf eine elektronische Datei (z. B. Dokument), ein Datenblatt, eine Bedienungsanleitung und eine Materialzusammensetzung. Vorteilhaft können damit über das reine Identifizieren des Materials hinaus weitergehende Information zu der Komponente und/oder dem Material zu dem Benutzer ausgegeben werden, wodurch sich die Verwendung der Komponente und ggf. die Kenntnisse des Benutzers weiter verbessern lassen.

In einer Ausführungsform weist das Verfahren ferner mindestens eines auf von:
- Freigeben eines Betriebs einer Maschine (z. B. in der die Komponente eingebaut oder einzubauen ist), wenn beim Auswerten eine Übereinstimmung mit einem vorgegebenen Spektrum, das einem für diese Maschine gewünschten, vorbestimmten Material mit mindestens einem Nanopartikelmarker zugeordnet ist, festgestellt wird, und/oder
- Senden des Ergebnisses des Auswertens an eine Servereinrichtung, vorzugsweise eine Cloud-Servereinrichtung; und/oder
- Anpassen eines Betriebs einer Maschine (z. B. in der die Komponente eingebaut oder einzubauen ist) in Abhängigkeit vom Ergebnis des Auswertens.

Vorteilhaft können damit über das reine Identifizieren des Materials hinaus weitergehende Aktionen erfolgen, mit denen bspw. eine Beschädigung der Maschine oder der durch die Maschine behandelten Objekte durch das falsche Material der Komponente verhindert werden kann.

In einer weiteren Ausführungsform ist die Komponente vollständig aus mehreren aneinander angrenzenden, additiv gefertigten (z. B. Kunststoff-) Materialschichten (z. B. PA CF-, PA-, TPU-, PLA- oder Tough PLA-Materialschichten) gebildet, und alle Materialschichten weisen einen oder mehrere unterschiedliche Nanopartikelmarker auf. Alternativ oder zusätzlich weist das Bereitstellen der Komponente auf:
- Mischen eines Grundstoffgranulats, , vorzugsweise Kunststoffgranulats (z. B. PA CF-, PA-, TPU-, PLA- oder Tough PLA-Granulat), mit einem Nanopartikelmarker oder mehreren unterschiedlichen Nanopartikelmarkern zu einem Gemisch;
- Extrudieren des Gemischs zu einem Filament; und
- Herstellen der Komponente aus dem Filament mittels der additiven Fertigungsvorrichtung.

Vorteilhaft kann damit erreicht werden, dass die Komponente von jeglicher Seite aus und selbst noch im verschlissenen oder zerstörten Zustand mittels des Verfahrens untersucht werden kann, sodass mit dem Verfahren beispielsweise auch eine Fehlerursachenanalyse von bereits aufgetretenen Maschinen-, Produkt- (z. B. Behälter-) oder Komponentenfehlern möglich ist.

Ein weiterer Aspekt der vorliegenden Offenbarung betrifft ein System, das dazu konfiguriert ist, ein Verfahren zum Identifizieren wie hierin offenbart auszuführen.

Ein weiterer Aspekt der vorliegenden Offenbarung betrifft ein mobiles Endgerät, vorzugsweise Handheld-Endgerät, zum Identifizieren eines Materials einer additiv gefertigten Komponente. Das mobile Endgerät weist eine Strahlungsquelle zum Bestrahlen einer Komponente mit einer elektromagnetischen Strahlung auf. Das mobile Endgerät weist eine Aufnahmeeinrichtung (z. B. aufweisend eine Kamera, ein Spektrometer und/oder eine Hyperspektralkamera) zum Aufnehmen eines Spektrums, vorzugsweise Emissions- und/oder Absorptionsspektrums, der bestrahlten Komponente auf. Das mobile Endgerät weist eine (z. B. visuelle, akustische und/oder haptische) Ausgabeeinrichtung zum Ausgeben einer Information an einen Benutzer auf. Das mobile Endgerät weist eine Auswerteeinrichtung auf, die dazu konfiguriert ist, ein mittels der Aufnahmeeinrichtung aufgenommenes Spektrum der mittels der Strahlungsquelle bestrahlten Komponente, auf eine (z. B. vollständige, teilweise oder überwiegende) Übereinstimmung mit mindestens einem vorgegebenen Spektrum, das einem vorbestimmten Material mit mindestens einem Nanopartikelmarker (Marker aus Nanopartikeln) zum (z. B. eindeutigen) Identifizieren des vorbestimmten Materials zugeordnet ist, auszuwerten, und/oder zum Auswerten auf eine Übereinstimmung mit mindestens einem vorgegebenen Spektrum (Spektrumseigenschaft), das einem vorbestimmten Material mit mindestens einem Nanopartikelmarker zum (z. B. eindeutigen) Identifizieren des vorbestimmten Materials zugeordnet ist, mittels einer (z. B. Drahtlos-) Kommunikationsschnittstelle (z. B. Funk-, WLAN-, Bluetooth-, NFC- und/oder Infrarot-Kommunikationsschnittstelle) an eine Servereinrichtung zu senden und optional ein Ergebnis des Auswertens von der Servereinrichtung mittels der Kommunikationsschnittstelle zu empfangen. Die Auswerteeinrichtung ist ferner dazu konfiguriert, die Ausgabeeinrichtung zum Ausgeben eines/des Ergebnisses des Auswertens zu betreiben. Vorteilhaft können mit dem mobilen Endgerät die gleichen Vorteile erzielt werden, die hierin bereits unter Bezugnahme auf das Verfahren beschrieben wurden.

In einem Ausführungsbeispiel ist die Auswerteeinrichtung ferner dazu konfiguriert, eine (z. B. Drahtlos-) Kommunikationsschnittstelle (z. B. Funk-, WLAN-, Bluetooth-, NFC- und/oder Infrarot-Kommunikationsschnittstelle) der Auswerteeinrichtung zum Senden des Ergebnisses des Auswertens zu einer Maschine und/oder zu einer Servereinrichtung zu betreiben.

In einem weiteren Ausführungsbeispiel ist die Auswerteeinrichtung ferner dazu konfiguriert, die Ausgabeeinrichtung zum Ausgeben einer Zusatzinformation, die dem vorbestimmten Material zugeordnet ist, wenn beim Auswerten eine Übereinstimmung mit dem diesen vorbestimmten Material zugeordneten, vorgegebenen Spektrum festgestellt wird, zu betreiben, wobei die Zusatzinformation vorzugsweise mindestens eines aufweist von eine Materialnummer, eine Materialbezeichnung, eine Chargennummer, ein Materialherstellzeitpunkt, ein digitaler Verweis (Link) auf eine elektronische Datei (z. B. Dokument), ein Datenblatt, eine Bedienungsanleitung und eine Materialzusammensetzung.

In einer Ausführungsform ist mindestens eines erfüllt von:
- bei dem Ausgeben des Ergebnisses wird eine Information über eine mangelnde Übereinstimmung ausgegeben, wenn beim Auswerten keine Übereinstimmung festgestellt wird;
- bei dem Ausgeben des Ergebnisses wird eine Information über eine vorhandene Übereinstimmung ausgegeben, wenn beim Auswerten eine Übereinstimmung festgestellt wird; und
- bei dem Ausgeben des Ergebnisses wird eine Information über das vorbestimmte Material ausgegeben, wenn beim Auswerten eine Übereinstimmung mit dem diesen vorbestimmten Material zugeordneten, vorgegebenen Spektrum festgestellt wird.

Vorteilhaft kann der Benutzer damit auf einfache Weise darüber informiert werden, ob die von ihm geprüfte Komponente tatsächlich mit dem gewünschten Material für die bestimmungsgemäße Verwendung additiv gefertigt wurde.

In einer weiteren Ausführungsform weist der mindestens eine Nanopartikelmarker insgesamt einen Volumen- und/oder Gewichtsanteil an dem vorbestimmten Material von ≥ 0,5 % und/oder ≤ 3 % auf (z. B. ≥ 0,6 % und/oder ≤ 1 %). Besonders vorteilhaft können damit im Wesentlichen keine Änderungen der Materialeigenschaften bewirkt, aber dennoch eine sichere und zuverlässige Erkennung des Nanopartikelmarkers ermöglicht werden.

In einer Ausführungsvariante ist der mindestens eine Nanopartikelmarker ein lumineszierender organischer und/oder anorganischer und/oder metallorganischer Farbstoff, ein Pigment und/oder eine Komplexverbindung.

In einer weiteren Ausführungsvariante sind mehrere Spektren vorgegeben, die unterschiedlichen vorbestimmten Materialien mit jeweils mindestens einem Nanopartikelmarker zum (z. B. eindeutigen) Identifizieren des jeweiligen vorbestimmten Materials (z. B. Kunststoffmaterial, vorzugsweise PA CF, PA, TPU, PLA oder Tough PLA) zugeordnet sind, und es wird auf eine Übereinstimmung mit einem der mehreren vorgegebenen Spektren ausgewertet. Vorteilhaft kann das Verfahren/das Endgerät somit an unterschiedlichen Komponenten aus unterschiedlichen Materialien angewendet werden, um jeweils festzustellen, ob die jeweilige Komponente aus dem für die bestimmungsgemäße Verwendung gewünschten Material gefertigt ist.

Vorzugsweise können die mehreren vorgegebenen Spektren auf einem Datenspeicher (z. B. der Auswerteeinrichtung, des mobilen Endgeräts und/der einer Servereinrichtung) gespeichert und/oder über eine (z. B. Drahtlos-) Kommunikationsschnittstelle (z. B. Funk-, WLAN-, Bluetooth-, NFC- und/oder Infrarot-Kommunikationsschnittstelle) (z. B. des mobilen Endgeräts) empfangen werden.

In einem Ausführungsbeispiel unterscheiden sich die unterschiedlichen vorbestimmten Materialien zum (z. B. eindeutigen) Identifizieren des jeweiligen vorbestimmten Materials durch mindestens eines von:
- unterschiedliche Gewichts- und/oder Volumenanteile des gleichen Nanopartikelmarkers;
- unterschiedliche Nanopartikelmarker;
- unterschiedliche Nanopartikelmarkermischungen jeweils mehrerer unterschiedlicher Nanopartikelmarker; und
- unterschiedliche Gewichts- und/oder Volumenanteile jeweils mehrerer unterschiedlicher Nanopartikelmarker.

Vorteilhaft kann ein eindeutiger Code durch den jeweiligen mindestens einen Nanopartikelmarker des jeweiligen vorbestimmten Materials zum eindeutigen Identifizieren dieses vorbestimmten Materials bereitgestellt werden.

Ein weiterer Aspekt der vorliegenden Offenbarung betrifft ein Verfahren zum Herstellen einer Komponente für eine Behälterbehandlungsanlage. Das Verfahren weist ein Mischen eines Grundstoffgranulats, vorzugsweise Kunststoffgranulats (z. B. PA CF-, PA-, TPU-, PLA- oder Tough PLA-Granulat), mit einem Nanopartikelmarker (Marker aus Nanopartikeln) oder mehreren unterschiedlichen Nanopartikelmarkern (Marker aus Nanopartikeln) zu einem Gemisch auf. Das Verfahren weist ferner ein Extrudieren des Gemischs zu einem Filament auf. Das Verfahren weist ferner ein Herstellen der (z. B. gesamten) Komponente aus dem Filament mittels einer additiven Fertigungsvorrichtung auf. Vorteilhaft ermöglicht das Verfahren die Erzielung der gleichen Vorteile, die hierin bereits unter Bezugnahme auf das Verfahren zum Identifizieren eines Materials beschrieben wurden.

In einem Ausführungsbeispiel ist die Komponente vollständig aus mehreren aneinander angrenzenden, vorzugsweise additiv gefertigten, (z. B. Kunststoff-) Materialschichten (z. B. PA CF-, PA-, TPU-, PLA- oder Tough PLA-Materialschichten) gebildet, und alle Materialschichten weisen einen oder mehrere unterschiedliche Nanopartikelmarker auf.

In einem weiteren Ausführungsbeispiel ist die Komponente ein Verschleißteil, ein Ersatzteil, eine Kette, ein Kettenrad oder ein Zahnrad. Alternativ oder zusätzlich weist der mindestens eine Nanopartikelmarker insgesamt einen Volumen- und/oder Gewichtsanteil an der Komponente von ≥ 0,5 % und/oder ≤ 3 % auf (z. B. ≥ 0,6 % und/oder ≤ 1 %). Alternativ oder zusätzlich ist der mindestens eine Nanopartikelmarker ein lumineszierender organischer und/oder anorganischer und/oder metallorganischer Farbstoff, ein Pigment und/oder eine Komplexverbindung.

Ein weiterer Aspekt der vorliegenden Offenbarung betrifft eine Behälterbehandlungsanlage mit der Komponente und/oder dem mobilen Endgerät.

Vorzugsweise kann die Behälterbehandlungsanlage zum Temperieren, Herstellen, Reinigen, Beschichten, Prüfen, Abfüllen, Verschließen, Pasteurisieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie, ausgebildet sein.

Beispielsweise können die Behälter als Flaschen, Dosen, Kanister, Kartons, Flakons, Tuben usw. ausgeführt sein.

Vorzugsweise kann sich der Begriff "Auswerteeinrichtung" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar.

### Kurzbeschreibung der Figur

Weitere Einzelheiten und Vorteile der Erfindung werden im Folgenden unter Bezug auf die beigefügte Zeichnung beschrieben. Es zeigt:

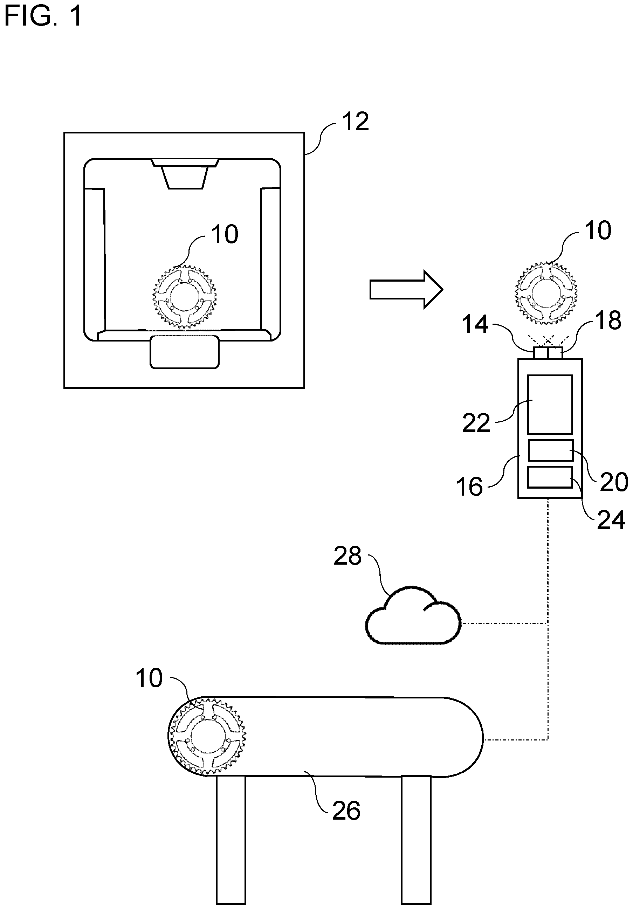

- Figur 1: eine schematische Darstellung eines Verfahrens zum Prüfen einer Komponente gemäß einem Ausführungsbeispiel der vorliegenden Offenbarung.

### Detaillierte Beschreibung beispielhafter Ausführungsformen

Die Figur 1 zeigt rein schematisch ein Verfahren zum Prüfen einer Komponente 10. Bevorzugt wird das Verfahren in einer Behälterbehandlungsanlage angewendet.

Bevorzugt ist die Komponente 10 ein Verschleißteil oder ein Ersatzteil. Besonders bevorzugt ist die Komponente 10 ein Kettenrad, wie in Figur 1 dargestellt ist, oder ein Zahnrad oder eine Kette (z. B. Antriebskette oder Förderkette). Vorzugsweise kann/soll die Komponente 10 in einer Behälterbehandlungsanlage verwendet werden, z. B. in einer Maschine 26 der Behälterbehandlungsanlage.

Die Komponente 10 wird mittels einer additiven Fertigungsvorrichtung12, z. B. ein 3D-Drucker, hergestellt.

Die Komponente 10 wird mit einer elektromagnetischen Strahlung mittels einer Strahlungsquelle 14 bestrahlt. Die Strahlungsquelle 14 kann bspw. in einem mobilen Endgerät 16 integriert sein.

Mittels einer Aufnahmeeinrichtung 18 wird ein Spektrum der bestrahlten Komponente 10 aufgenommen. Das Spektrum kann bspw. ein Emissions- und/oder Absorptionsspektrums der bestrahlten Komponente 10 sein. Die Aufnahmeeinrichtung 18 kann vorzugsweise ebenfalls in dem mobilen Endgerät 16 integriert sein.

Das aufgenommene Spektrum wird mittels einer Auswerteeinrichtung 20 ausgewertet. Die Auswerteeinrichtung 20 kann vorzugsweise ebenfalls in dem mobilen Endgerät 16 integriert sein. Es ist allerdings auch möglich, dass das aufgenommene Spektrum mittels einer Kommunikationsschnittstelle 24 des mobilen Endgeräts 16 zu einer Servereinrichtung 28 mit eigener Auswerteeinrichtung zum Auswerten übertragen wird (z. B. über ein lokales oder globales Netzwerk, z. B. das Internet).

Beim Auswerten wird auf eine Übereinstimmung des aufgenommenen Spektrums mit einem vorgegebenen Spektrum geprüft. Das vorgegebene Spektrum ist einem vorbestimmten Material mit mindestens einem Nanopartikelmarker zugeordnet bzw. identifiziert dieses. Das vorgegebene Spektrum kann damit das vorbestimmte Material eindeutig identifizieren. Das vorgegebene Spektrum kann bspw. auf einem Datenspeicher der Auswerteeinrichtung 20 gespeichert sein oder mittels der Kommunikationsschnittstelle 24 des mobilen Endgeräts 16 empfangen werden, z. B. von der Servereinrichtung 28. Das vorgegebene Spektrum bzw. dessen charakteristische Eigenschaften kann/können bspw. zuvor in Tests an dem vorbestimmten Material, mit dem mindestens einen Nanopartikelmarker ermittelt werden.

Vorzugsweise kann die Kommunikationsschnittstelle 24 eine Drahtlos-Kommunikationsschnittstelle sein. Beispielsweise kann die Kommunikationsschnittstelle 24 eine Funk-, WLAN-, Bluetooth-, NFC- und/oder Infrarot-Kommunikationsschnittstelle 24 sein.

Durch das Auswerten kann geprüft werden, ob die Komponente 10 tatsächlich aus dem gewünschten (richtigen), vorbestimmten Material mittels der additiven Fertigungsvorrichtung 12 hergestellt wurde oder nicht. Die Komponente 10 könnte bspw. wie folgt beschrieben wie gewünscht hergestellt werden.

Zunächst kann ein Grundstoffgranulat mit einem oder mehreren Nanopartikelmarkern zu einem Gemisch vermischt werden.

Das Grundstoffgranulat ist vorzugsweise ein Kunststoffgranulat, z. B. ein PA CF-Granulat (Kohlefaserverstärktes Polyamid-Granulat), ein PA-Granulat (Polyamid-Granulat), ein TPU-Granulat (thermoplastisches Polyurethan-Granulat) oder PLA-Granulat (Polyactid-Granulat), z. B. Tough PLA-Granulat.

Der mindestens eine Nanopartikelmarker kann vorzugsweise ein lumineszierender organischer und/oder anorganischer und/oder metallorganischer Farbstoff, ein Pigment und/oder eine Komplexverbindung sein.

Das Gemisch mit dem Grundstoffgranulat und dem mindestens einen Nanopartikelmarker kann dann von einem Extruder zu einem (3D-Drucker-) Filament extrudiert (stranggepresst) werden. Bei einem vorbestimmten Druck und einer vorbestimmten Temperatur kann das Filament aus einer Düse des Extruders gepresst werden. Das Filament kann bspw. auf eine Spule für die additive Fertigungsvorrichtung 12 aufgewickelt werden.

Die Komponente 10 kann dann aus dem Filament mittels der additiven Fertigungsvorrichtung 12 additiv gefertigt werden. Vorzugsweise kann die Komponente 10 vollständig aus dem Filament hergestellt werden. Beispielsweise kann die Komponente 10 vollständig aus mehreren aneinander angrenzenden, additiv gefertigten Materialschichten gebildet sein, und alle Materialschichten können mindestens einen Nanopartikelmarker aufweisen.

Bevorzugt weist der mindestens eine Nanopartikelmarker insgesamt einen Volumen- und/oder Gewichtsanteil an der Komponente 10 bzw. dem Filament von ≥ 0,5 % und/oder ≤ 3 % auf.

Nachfolgend ist wieder auf das Auswerten auf eine Übereinstimmung des aufgenommenen Spektrums mit dem vorgegebenen Spektrum Bezug genommen. Abhängig von dem Auswerten kann nach dem Auswerten ein Ergebnis des Auswertens mittels einer Ausgabeeinrichtung 22 ausgegeben. Die Ausgabeeinrichtung 22 weist vorzugsweise eine visuelle Anzeige und/oder einen Lautsprecher auf. Die Ausgabeeinrichtung 22 kann vorzugsweise ebenfalls in dem mobilen Endgerät 16 integriert sein.

Abhängig von dem Ergebnis des Auswertens können unterschiedliche Informationen mittels der Ausgabeeinrichtung 22 ausgegeben werden.

Beispielsweise kann eine, vorzugsweise visuelle und/oder akustische, Information über eine mangelnde Übereinstimmung ausgegeben werden, wenn beim Auswerten keine Übereinstimmung festgestellt wird. Die visuelle Information kann bspw. mit einem farbigen, vorzugsweise roten, Symbol, z. B. in Kreuzform, ausgegeben werden. Alternativ oder zusätzlich kann bspw. ein akustischer Warnton ausgegeben werden. Der Benutzer weiß dann bspw., dass die Komponente 10 aus dem falschen Material hergestellt wurde und damit bspw. nicht oder nur unzureichend für die beabsichtige Verwendung geeignet ist.

Alternativ kann bspw. eine, vorzugsweise visuelle und/oder akustische, Information über eine vorhandene Übereinstimmung ausgegeben, wenn beim Auswerten eine Übereinstimmung festgestellt wird. Die visuelle Information kann bspw. mit einem farbigen, vorzugsweise grünen, Symbol, z. B. in Häkchenform, ausgegeben werden. Alternativ oder zusätzlich kann bspw. ein akustischer Bestätigungston ausgegeben werden. Der Benutzer weiß dann bspw., dass die Komponente 10 aus dem richtigen/gewünschten Material hergestellt wurde und damit für die beabsichtige Verwendung geeignet ist.

Es ist bspw. auch möglich, dass eine Information über das vorbestimmte Material ausgegeben wird, wenn beim Auswerten eine Übereinstimmung mit dem diesen vorbestimmten Material zugeordneten, vorgegebenen Spektrum festgestellt wird.

Es ist bspw. ebenfalls möglich, dass noch eine Zusatzinformation, die dem vorbestimmten Material zugeordnet ist, von einem Datenspeicher abgerufen wird, wenn beim Auswerten eine Übereinstimmung mit dem diesen vorbestimmten Material zugeordneten, vorgegebenen Spektrum festgestellt wird. Diese Zusatzinformation kann vorzugsweise mindestens eines aufweisen von eine Materialnummer, eine Materialbezeichnung, eine Chargennummer, ein Materialherstellzeitpunkt, ein digitaler Verweis (Link) auf eine elektronische Datei (z. B. Dokument), ein Datenblatt, eine Bedienungsanleitung und eine Materialzusammensetzung. Die Zusatzinformation kann bspw. in einer Datenbank gespeichert sein. Letztlich kann die abgerufene Zusatzinformation mittels der Ausgabeeinrichtung 22 bevorzugt visuell und/oder akustisch ausgegeben werden.

Es ist auch möglich, dass ein Betrieb einer Maschine 26, in der die Komponente 10 eingebaut oder einzubauen ist, nur freigegeben wird, wenn beim Auswerten eine Übereinstimmung mit einem vorgegebenen Spektrum, das einem für diese Maschine 26 gewünschten, vorbestimmten Material, mit dem mindestens einen Nanopartikelmarker zugeordnet ist, festgestellt wird. Beispielsweise kann die Auswerteeinrichtung 20 zum Freigeben der Maschine 26 mit einer Maschinensteuerung der Maschine 26 kommunizieren.

Ebenfalls möglich ist ein Anpassen eines Betriebs der Maschine 26 in Abhängigkeit von dem Ergebnis des Auswertens. Beispielsweise kann die Maschine 26 nur dann mit ihrer vollen Leistung bzw. Ihrer vollen Geschwindigkeit betrieben werden, wenn beim Auswerten eine Übereinstimmung mit einem vorgegebenen Spektrum, das einem für diese Maschine 26 gewünschten, vorbestimmten Material mit dem mindestens einen Nanopartikelmarker zugeordnet ist, festgestellt wird.

Die Maschine 26 ist besonders bevorzugt eine Behältertransportmaschine oder Behälterbehandlungsmaschine, z. B. zum Temperieren, Herstellen, Reinigen, Beschichten, Prüfen, Abfüllen, Verschließen, Pasteurisieren, Etikettieren, Bedrucken, Beschriften, Laserbeschriften und/oder Verpacken von Behältern.

Es ist ebenfalls möglich, dass das Ergebnis des Auswertens an eine Servereinrichtung 28, vorzugsweise eine Cloud-Servereinrichtung, gesendet wird. Die Servereinrichtung 28 kann bspw. eine Servereinrichtung eines Herstellers der Maschine 26 sein.

Obenstehend ist ein Beispiel erläutert, bei dem beim Auswerten auf eine Übereinstimmung des aufgenommenen Spektrums mit lediglich einem vorgegebenen Spektrum geprüft wird. Es ist jedoch auch möglich, dass mehrere Spektren vorgegeben sind. Die mehrere Spektren sind unterschiedlichen vorbestimmten Materialien mit jeweils mindestens einem Nanopartikelmarker zugeordnet. So kann auf eine Übereinstimmung mit einem der mehreren vorgegebenen Spektren ausgewertet werden. D.h., es kann ausgewertet werden, ob überhaupt eine Übereinstimmung mit einem der vorgegebenen Spektren vorliegt und, wenn ja, mit welchem der vorgegebenen Spektren eine Übereinstimmung vorliegt.

Die unterschiedlichen vorbestimmten Materialien können eindeutig identifizierbar bzw. voneinander unterscheidbar sein durch bspw. unterschiedliche Gewichts- und/oder Volumenanteile des gleichen Nanopartikelmarkers, unterschiedliche Nanopartikelmarker, unterschiedliche Nanopartikelmarkermischungen jeweils mehrerer unterschiedlicher Nanopartikelmarker und/oder unterschiedliche Gewichts- und/oder Volumenanteile jeweils mehrerer unterschiedlicher Nanopartikelmarker voneinander unterscheiden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Komponente
- 12: additive Fertigungsvorrichtung
- 14: Strahlungsquelle
- 16: mobiles Endgerät
- 18: Aufnahmeeinrichtung
- 20: Auswerteeinrichtung
- 22: Ausgabeeinrichtung
- 24: Kommunikationsschnittstelle
- 26: Maschine
- 28: Servereinrichtung

## Patentansprüche

1. Verfahren zum Identifizieren eines Materials einer Komponente (10), vorzugsweise einer Behälterbehandlungsanlage, wobei das Verfahren aufweist:
Bereitstellen der Komponente (10), die mittels einer additiven Fertigungsvorrichtung (12) hergestellt ist;
Bestrahlen der Komponente (10) mit einer elektromagnetischen Strahlung mittels einer Strahlungsquelle (14);
Aufnehmen eines Spektrums, vorzugsweise Emissions- und/oder Absorptionsspektrums, der bestrahlten Komponente (10) mittels einer Aufnahmeeinrichtung (18);
Auswerten des aufgenommenen Spektrums auf eine Übereinstimmung mit mindestens einem vorgegebenen Spektrum, das einem vorbestimmten Material mit mindestens einem Nanopartikelmarker zum Identifizieren des vorbestimmten Materials zugeordnet ist, mittels einer Auswerteeinrichtung (20); und
Ausgeben eines Ergebnisses des Auswertens mittels einer Ausgabeeinrichtung (22).

2. Verfahren nach Anspruch 1, wobei:
die Strahlungsquelle (14), die Aufnahmeeinrichtung (18) und die Ausgabeeinrichtung (22), sowie optional die Auswerteeinrichtung (20), in einem mobilen Endgerät (16), vorzugsweise Handheld-Endgerät, integriert sind.

3. Verfahren nach Anspruch 1 oder Anspruch 2, ferner aufweisend:
Abrufen einer Zusatzinformation, die dem vorbestimmten Material zugeordnet ist, wenn beim Auswerten eine Übereinstimmung mit dem diesen vorbestimmten Material zugeordneten, vorgegebenen Spektrum festgestellt wird, von einem Datenspeicher; und
Ausgeben der abgerufenen Zusatzinformationen mittels der Ausgabeeinrichtung (22),
wobei vorzugsweise:
die Zusatzinformation mindestens eines aufweist von eine Materialnummer, eine Materialbezeichnung, eine Chargennummer, ein Materialherstellzeitpunkt, ein digitaler Verweis auf eine elektronische Datei, ein Datenblatt, eine Bedienungsanleitung und eine Materialzusammensetzung.

4. Verfahren nach einem der vorherigen Ansprüche, ferner aufweisend mindestens eines von:
Freigeben eines Betriebs einer Maschine (26), wenn beim Auswerten eine Übereinstimmung mit einem vorgegebenen Spektrum, das einem für diese Maschine (26) gewünschten, vorbestimmten Material mit mindestens einem Nanopartikelmarker zugeordnet ist, festgestellt wird,
Senden des Ergebnisses des Auswertens an eine Servereinrichtung (28), vorzugsweise eine Cloud-Servereinrichtung; und
Anpassen eines Betriebs einer Maschine (26) in Abhängigkeit vom Ergebnis des Auswertens.

5. Verfahren nach einem der vorherigen Ansprüche, wobei:
die Komponente (10) vollständig aus mehreren aneinander angrenzenden, additiv gefertigten Materialschichten gebildet ist und alle Materialschichten einen oder mehrere unterschiedliche Nanopartikelmarker aufweisen; und/oder
das Bereitstellen der Komponente (10) aufweist:
- Mischen eines Grundstoffgranulats, vorzugsweise Kunststoffgranulats, mit einem Nanopartikelmarker oder mehreren unterschiedlichen Nanopartikelmarkern zu einem Gemisch;
- Extrudieren des Gemischs zu einem Filament; und
- Herstellen der Komponente (10) aus dem Filament mittels der additiven Fertigungsvorrichtung (12).

6. Mobiles Endgerät (16), vorzugsweise Handheld-Endgerät, zum Identifizieren eines Materials einer additiv gefertigten Komponente (10), aufweisend:
eine Strahlungsquelle (14) zum Bestrahlen einer Komponente (10) mit einer elektromagnetischen Strahlung;
eine Aufnahmeeinrichtung (18) zum Aufnehmen eines Spektrums, vorzugsweise Emissions- und/oder Absorptionsspektrums, der bestrahlten Komponente (10);
eine Ausgabeeinrichtung (22) zum Ausgeben einer Information an einen Benutzer; und
eine Auswerteeinrichtung (20), die dazu konfiguriert ist:
- ein mittels der Aufnahmeeinrichtung (18) aufgenommenes Spektrum der mittels der Strahlungsquelle (14) bestrahlten Komponente (10):
- auf eine Übereinstimmung mit mindestens einem vorgegebenen Spektrum, das einem vorbestimmten Material mit mindestens einem Nanopartikelmarker zum Identifizieren des vorbestimmten Materials zugeordnet ist, auszuwerten, und/oder
- zum Auswerten auf eine Übereinstimmung mit mindestens einem vorgegebenen Spektrum, das einem vorbestimmten Material mit mindestens einem Nanopartikelmarker zum Identifizieren des vorbestimmten Materials zugeordnet ist, mittels einer Kommunikationsschnittstelle (24) an eine Servereinrichtung (28) zu senden und ein Ergebnis des Auswertens von der Servereinrichtung (28) mittels der Kommunikationsschnittstelle (24) zu empfangen; und
- die Ausgabeeinrichtung (22) zum Ausgeben eines/des Ergebnisses des Auswertens zu betreiben.

7. Mobiles Endgerät (16) nach Anspruch 6, wobei die Auswerteeinrichtung (20) ferner dazu konfiguriert ist:
eine Kommunikationsschnittstelle (24) der Auswerteeinrichtung (20) zum Senden des Ergebnisses des Auswertens zu einer Maschine (26) und/oder zu einer Servereinrichtung (28) zu betreiben;
die Ausgabeeinrichtung (22) zum Ausgeben einer Zusatzinformation, die dem vorbestimmten Material zugeordnet ist, wenn beim Auswerten eine Übereinstimmung mit dem diesen vorbestimmten Material zugeordneten, vorgegebenen Spektrum festgestellt wird, zu betreiben, wobei die Zusatzinformation vorzugsweise mindestens eines aufweist von eine Materialnummer, eine Materialbezeichnung, eine Chargennummer, ein Materialherstellzeitpunkt, ein digitaler Verweis auf eine elektronische Datei, ein Datenblatt, eine Bedienungsanleitung und eine Materialzusammensetzung.

8. Verfahren nach einem der Ansprüche 1 bis 5 oder mobiles Endgerät (16) nach Anspruch 6 oder Anspruch 7, wobei mindestens eines erfüllt ist von:
bei dem Ausgeben des Ergebnisses wird eine Information über eine mangelnde Übereinstimmung ausgegeben, wenn beim Auswerten keine Übereinstimmung festgestellt wird;
bei dem Ausgeben des Ergebnisses wird eine Information über eine vorhandene Übereinstimmung ausgegeben, wenn beim Auswerten eine Übereinstimmung festgestellt wird; und
bei dem Ausgeben des Ergebnisses wird eine Information über das vorbestimmte Material ausgegeben, wenn beim Auswerten eine Übereinstimmung mit dem diesen vorbestimmten Material zugeordneten, vorgegebenen Spektrum festgestellt wird.

9. Verfahren nach einem der Ansprüche 1 bis 5 oder 8 oder mobiles Endgerät (16) nach einem der Ansprüche 6 bis 8, wobei:
der mindestens eine Nanopartikelmarker insgesamt einen Volumen- und/oder Gewichtsanteil an dem vorbestimmten Material von ≥ 0,5 % und/oder ≤ 3 % aufweist.

10. Verfahren nach einem der Ansprüche 1 bis 5, 8 oder 9 oder mobiles Endgerät (16) nach einem der Ansprüche 6 bis 9, wobei:
der mindestens eine Nanopartikelmarker ein lumineszierender organischer und/oder anorganischer und/oder metallorganischer Farbstoff, ein Pigment und/oder eine Komplexverbindung ist.

11. Verfahren nach einem der Ansprüche 1 bis 5, 8, 9 oder 10 oder mobiles Endgerät (16) nach einem der Ansprüche 6 bis 10, wobei:
mehrere Spektren vorgegeben sind, die unterschiedlichen vorbestimmten Materialien mit jeweils mindestens einem Nanopartikelmarker zum Identifizieren des jeweiligen vorbestimmten Materials zugeordnet sind; und
auf eine Übereinstimmung mit einem der mehreren vorgegebenen Spektren ausgewertet wird.

12. Verfahren nach Anspruch 11 oder mobiles Endgerät (16) nach Anspruch 11, wobei die unterschiedlichen vorbestimmten Materialien sich zum Identifizieren des jeweiligen vorbestimmten Materials unterscheiden durch mindestens eines von:
unterschiedliche Gewichts- und/oder Volumenanteile des gleichen Nanopartikelmarkers;
unterschiedliche Nanopartikelmarker;
unterschiedliche Nanopartikelmarkermischungen jeweils mehrerer unterschiedlicher Nanopartikelmarker; und
unterschiedliche Gewichts- und/oder Volumenanteile jeweils mehrerer unterschiedlicher Nanopartikelmarker.

13. Verfahren zum Herstellen einer Komponente (10) für eine Behälterbehandlungsanlage, wobei das Verfahren aufweist:
Mischen eines Grundstoffgranulats, vorzugsweise Kunststoffgranulats, mit einem Nanopartikelmarker oder mehreren unterschiedlichen Nanopartikelmarkern zu einem Gemisch;
Extrudieren des Gemischs zu einem Filament; und
Herstellen der Komponente (10) aus dem Filament mittels einer additiven Fertigungsvorrichtung (12).

14. Komponente (10) für eine Behälterbehandlungsanlage, wobei:
die Komponente (10) vollständig aus mehreren aneinander angrenzenden, vorzugsweise additiv gefertigten, Materialschichten gebildet ist und alle Materialschichten einen oder mehrere unterschiedliche Nanopartikelmarker aufweisen.

15. Verfahren nach einem der Ansprüche 1 bis 5 oder 8 bis 13 oder Komponente (10) nach Anspruch 14, wobei mindestens eines erfüllt ist von:
die Komponente (10) ist ein Verschleißteil, ein Ersatzteil, eine Kette, ein Kettenrad oder ein Zahnrad;
der mindestens eine Nanopartikelmarker weist insgesamt einen Volumen- und/oder Gewichtsanteil an der Komponente (10) von ≥ 0,5 % und/oder ≤ 3 % auf; und
der mindestens eine Nanopartikelmarker ist ein lumineszierender organischer und/oder anorganischer und/oder metallorganischer Farbstoff, ein Pigment und/oder eine Komplexverbindung.
